**Europäisches Patentamt**

**European Patent Office**

**Office européen des brevets**

(19)

(11) Veröffentlichungsnummer: **0 136 619**
**B1**

(12) # EUROPÄISCHE PATENTSCHRIFT

(45) Veröffentlichungstag der Patentschrift:
**12.04.89**

(51) Int. Cl.⁴: **C 09 B 67/54,** C 09 B 41/00,
D 06 P 1/18

(21) Anmeldenummer: **84111119.8**

(22) Anmeldetag: **18.09.84**

(54) **Verfahren zur Herstellung von Azofarbstoffpräparaten.**

(30) Priorität: **21.09.83 CH 5129/83**

(43) Veröffentlichungstag der Anmeldung:
**10.04.85 Patentblatt 85/15**

(45) Bekanntmachung des Hinweises auf die Patenterteilung:
**12.04.89 Patentblatt 89/15**

(84) Benannte Vertragsstaaten:
**CH DE FR GB IT LI**

(56) Entgegenhaltungen:
**DE-A- 3 234 335**
**FR-A- 2 207 169**
**FR-A- 2 319 685**
**FR-A- 2 341 625**
**FR-A- 2 365 609**

(73) Patentinhaber: **CIBA-GEIGY AG, Klybeckstrasse 141,
CH-4002 Basel (CH)**

(72) Erfinder: **Rabassa, Alberto, Am Goldbrunnen 20,
CH-4104 Oberwil (CH)**
Erfinder: **Bruttel, Beat, Dr., Ob den Reben 5,
CH-4461 Böckten (CH)**

(74) Vertreter: **Zumstein, Fritz, Dr. et al, Bräuhausstrasse 4,
D-8000 München 2 (DE)**

**Beschreibung**

Die vorliegende Erfindung betrifft ein Verfahren zur Herstellung von Präparaten von in Wasser schwer- bis unlöslichen Azofarbstoffen, die nach dem Verfahren hergestellten Präparate, sowie deren Verwendung zum Färben und Bedrucken von hydrophobem Fasermaterial.

Bei der Herstellung von Präparaten von in Wasser schwer- bis unlöslichen Azofarbstoffen war man bislang bestrebt, die Synthese so zu führen, daß am Ende der Reaktion ein möglichst grobkristallines, gut zu filtrierendes Produkt erhalten wird. Das hat jedoch zur Folge, daß im Anschluß an die Filtration eine aufwendige Mahloperation nötig ist, um den Farbstoffpreßkuchen in eine feinteilige, zum Färben geeignete Dispersion zu überführen. Sowohl das Heruntermahlen der Farbstoffpartikel, als auch das klassische Filtrierverfahren mittels Filterpressen sind jedoch sehr arbeitsintensive Verfahrensschritte mit hohem Energieverbrauch.

Mit der Entwicklung moderner Filtertechniken kam daher der Wunsch auf, die Synthese so zu steuern, daß der Farbstoff bereits in einer feinkristallinen Form anfällt, um so jede Mahloperation möglichst zu vermeiden. Ferner versucht man in letzter Zeit im Zuge der Automatisierung die Synthese von Azofarbstoffen weitgehend zu vereinfachen und die Diazotierung und Kupplung nicht mehr wie bislang in diskreten Einzelschritten, womöglich noch unter Klärfiltration des Diazoniumsalzes, sondern synchron, in einem Reaktionsgefäß oder einer Reaktionszone durchzuführen.

Aus US-A-3 793 305 ist ein derartiges einstufiges Verfahren zur Herstellung von Azofarbstoffen bekannt, wonach ein diazotierbares aromatisches Amin, ein Diazotierungsmittel und eine Kupplungskomponente gleichzeitig in einem sauren Medium zur Reaktion gebracht werden. Nachteil ist jedoch, daß nach diesem Verfahren ein ausgesprochen grobkristallines Produkt erhalten wird, das sich wohl gut filtrieren läßt, aber anschließend gemahlen werden muß.

In der DE-A-2 533 603 ist ein Verfahren zur synchronen Diazotierung und Kupplung angegeben, wonach jedoch die Synthesesuspension während der Reaktion einem Mahlvorgang unterworfen wird.

Schließlich beschreibt die FR-A-2 341 625 ein weiteres Verfahren zur Herstellung von Azofarbstoffen in dem die Diazotierung, die gegebenenfalls auch synchron mit der Kupplung durchgeführt weden kann, in Gegenwart von freien Dispergatorsäuren erfolgt. Mit der Verwendung der Dispergatorsäuren – anstelle von Mineralsäuren – soll die Salzmenge in den erhaltenen Farbstoffdispersionen bzw. -lösungen gesenkt und die Herstellung von stabilen Farbstoffpräparaten, z.B. durch Vermeidung von Salzabtrennverfahren, erleichtert werden. Auch in diesem Verfahren ist mindestens ein Mahlprozeß, entweder für die Ausgangsverbindungen oder während der eigentlichen Synthese oder für die erhaltenen Farbstoffdispersionen unerläßlich, um die Reaktion überhaupt durchführen zu können bzw. um feinkristalline Farbstoffzubereitungen zu erhalten.

Aufgabe der vorliegenden Erfindung ist es nun, ein möglichst rationelles Verfahren zur Herstellung von Präparaten von in Wasser schwer- bis unlöslichen Azofarbstoffen zu finden, wobei die folgenden Bedingungen erfüllt werden sollten:
(a) Diazotieren und Kuppeln in einem Schritt,
(b) ohne klassische Filtration über Filterpresse und
(c) ohne die übliche Naßmahlung.

Die Aufgabe wird dadurch gelöst, daß man die Diazotierung und Kupplung unter intensiver Durchmischung der Synthesesuspension in Gegenwart eines oberflächenaktiven Mittels durchführt, die so erhaltene Farbstoffdispersion mittels Membrantrennverfahren aufarbeitet und ohne Mahlung direkt zu einer Flüssigformulierung oder einem pastösen oder festen Farbstoffpräparat weiterverarbeitet.

Gegenstand der Erfindung ist somit ein Verfahren zur Herstellung von Präparaten von in Wasser schwer- bis unlöslichen Azofarbstoffen durch gleichzeitiges Diazotieren und Kuppeln in einer Eintopfreaktion. Filtrieren der Farbstoffdispersion und gegebenenfalls anschließende Trocknung, dadurch gekennzeichnet, daß man die gleichzeitige Diazotierung und Kupplung unter intensiver Durchmischung der wäßrigen Lösung bzw. Suspension der Reaktanden, in Gegenwart eines oder mehrerer oberflächenaktiver Mittel durchführt, die verdünnte Farbstoffdispersion mittels Membrantrennverfahren aufkonzentriert und zumindest teilweise entsalzt und/oder von Säure befreit und, ohne jegliche Mahlung, in eine lagerstabile Flüssigformulierung oder durch Trocknen in ein festes Farbstoffpräparat überführt.

Bei den in Wasser schwer- bis unlöslichen Azofarbstoffen handelt es sich im vorliegenden Fall in erster Linie um Dispersionsfarbstoffe, die sich zum Färben von hydrophoben Fasermaterialien eignen.

Als typische Diazokomponenten, die im erfindungsgemäßen Verfahren Verwendung finden können, sind z.B. genannt:
4-Nitroanilin, 3-Nitroanilin,
2-Chlor-4-nitroanilin, 2,6-Dichlor-4-nitroanilin,
4-Aminoacetanilid, 2,4-Dinitroanilin,
2-Cyan-4-nitroanilin, 4-Cyananilin,
4-Chloranilin, 2,4,5-Trichloranilin,
2,5-Dimethoxyanilin, o-Anisidin, p-Anisidin,
o-Phenetidin, p-Phenetidin, o-Toluidin,
p-Toluidin, 4-Nitro-2-aminoanisol,
2-Nitro-4-aminoanisol, p-Phenoxyanilin,
α-Naphthylamin, 4-Methylsulfonylanilin,
4-Amino-2,4-dichlorbenzophenon,
4'-Amino-2,4-dinitrobenzophenon,
2-Aminobenzthiazol, 2-Amino-4-chlorbenzthiazol,
2-Amino-4-cyanbenzthiazol,
2-Amino-4,6-dinitrobenzthiazol,
2-Amino-4-methoxy-6-nitrobenzthiazol.

Als Kupplungskomponenten kommen in Frage:
N-substituierte Aniline, wie z.B.
N,N-Dimethylanilin,
N,N-Di-(β-carbomethoxyäthyl)-anilin,

N-(γ-Methoxypropyl)-3-acetylamino-anilin,
N,N-Di-(β-hydroxyäthyl)-2,5-dimethoxyanilin,
N-Äthyl-N-(β-cyanoäthyl)-anilin,
N-(Cyanäthoxyäthyl)-N-(β-cyanoäthyl)-anilin,
N-Äthyl-N-(β-hydroxyäthyl)-anilin,
N,N-Di-(β-hydroxyäthyl)-anilin;
ferner Phenol und substituierte Phenole wie o-, m-, p-Kresol, Resorcinol, 4-Phenylazo-1,3-dihydroxybenzol und 3-Acetylaminophenol, Naphthole, wie 1- oder 2-Naphthol, 6-Brom-2-naphthol, 4-Methoxy-1-naphthol und 2-Naphthol-6-sulfonamid; oder auch Acylacetoarylamide, 2,6-Dihydroxypyridine oder 5-Pyrazolone.

Diazotierung und Kupplung werden in einem sauren Reaktionsmedium durchgeführt, wobei mittels einer Carbonsäure, wie z.B. Essigsäure oder auch einer Mineralsäure, wie z.B. Schwefelsäure oder Salzsäure ein, für die Reaktion hinreichend niedriger pH-Wert eingestellt wird.

Zweckmäßigerweise geht man so vor, daß man Diazo- und Kupplungskomponente in gegebenenfalls mittels Wasser verdünnter Säure zusammen mit dem oberflächenaktiven Mittel vorlegt und unter kräftigem Rühren das Diazotierungsmittel, wie z.B. wäßrige Alkalinitrit-Lösung zulaufen läßt. Neben dem Zusatz eines oder mehrerer oberflächenaktiver Mittel ist eine intensive Durchmischung der Reaktanden erfindungswesentlich. Erst die Kombination beider Maßnahmen ergibt ein feinkristallines Produkt. Eine intensive Durchmischung erreicht man vorteilhaft durch die Verwendung von Rührern mit starker Schwerwirkung. Auch das Anbringen von Leitblechen im Reaktionsgefäß kann die Durchmischung der Komponenten verbessern.

Als oberflächenaktive Mittel kommen neben kationischen vor allem nicht-ionische, insbesondere jedoch anionische, Tenside in Frage. Neben Tensiden der einen oder anderen Gruppe können auch Tensidgemische eingesetzt werden, wobei in erster Linie Gemische von nicht-ionischen und anionischen Tensiden gemeint sind.

Bei den anionischen Tensiden haben sich insbesondere Kondensationsprodukte von aromatischen Sulfonsäuren mit Formaldehyd, wie Kondensationsprodukte aus Formaldehyd und Naphthalinsulfonsäuren oder aus Formaldehyd, Naphthalinsulfonsäure und Benzolsulfonsäure, oder ein Kondensationsprodukt aus Rohkresol, Formaldehyd und Naphthalinsulfonsäure als wirksam erwiesen. Weiterhin kommen vor allem Ligninsulfonate in Betracht, z.B. solche, die nach dem Sulfit- oder Kraft-Verfahren gewonnen werden. Vorzugsweise handelt es sich um Produkte, die z.T. hydrolysiert, oxidiert, sulfomethyliert oder desulfoniert und nach bekannten Verfahren fraktioniert werden, z.B. nach dem Molekulargewicht oder nach dem Sulfonierungsgrad. Auch Mischungen aus Sulfit- und Kraftligninsulfonaten sind gut wirksam. Besonders geeignet sind Ligninsulfonate mit einem durchschnittlichen Molekulargewicht zwischen 1000 und 80 000, einem Gehalt an aktivem Ligninsulfonat von mindestens 80% und vorzugsweise mit niedrigem Gehalt an mehrwertigen Kationen. Der Sulfonierungsgrad kann in weiten Grenzen variieren. Das Verhältnis von Kohlenstoff zu organisch gebundenem Schwefel liegt beispielsweise zwischen 9:1 und 55:1. Ferner gehören zu den bevorzugten anionischen Tensiden Dialkylsulfosuccinate, deren Alkylgruppen je 3 bis 10 Kohlenstoffatome aufweisen, wie z.B. Dipropylsulfosuccinat, Di-isobutylsulfosuccinat, Diheptylsulfosuccinat, Di-hexylsulfosuccinat und Diamylsulfosuccinat vorzugsweise jedoch Di-octylsulfosuccinat.

Des weiteren sind genannt sulfatierte oder sulfonierte Fettsäuren oder Fettsäureester von Fettsäuren mit 10 bis 22, vorzugsweise 12 bis 18 Kohlenstoffatomen, wie z.B. sulfatierte Ölsäure, Elaidinsäure oder Ricinolsäure bzw. deren niedere Alkylester, z.B. Äthyl-, Propyl- oder Butylester. Sehr gut geeignet sind auch die entsprechenden sulfatierten oder sulfonierten Öle, wie z.B. Olivenöl, Ruböl und vor allem Ricinusöl.

Normalerweise liegen die anionischen Dispergiermittel in Form ihrer Alkalisalze, ihrer Ammoniumsalze oder ihrer wasserlöslichen Aminsalze vor. Vorteilhafterweise werden elektrolytarme Qualitäten eingesetzt.

Als nicht-ionische Tenside kommen bevorzugt Äthylenoxid-Addukte aus der Klasse der Umsetzungsprodukte von Äthylenoxid mit
a) gesättigten und/oder ungesättigten Fettalkoholen mit 6 bis 20 C-Atomen; oder
b) Alkylphenolen mit 4 bis 12 C-Atomen im Alkylrest; oder
c) gesättigten und/oder ungesättigten Fettaminen mit 14 bis 20 C-Atomen; oder
d) gesättigten und/oder ungesättigten Fettsäuren mit 14 bis 20 C-Atomen in Betracht.

Als Äthylenoxid-Addukte sind im einzelnen genannt:
a) Umsetzungsprodukte von gesättigten und/oder ungesättigten Fettalkoholen mit 6 bis 20 C-Atomen, mit 5 bis 30 Mol Äthylenoxid je Mol Hydroxylgruppe;
b) Umsetzungsprodukte von Alkylphenolen mit 4 bis 12 C-Atomen mit 5 bis 20 Mol, vorzugsweise 8 bis 15 Mol, Äthylenoxid je Mol phenolische Hydroxylgruppe;
c) Umsetzungsprodukte von gesättigten und/oder ungesättigten Fettaminen mit 14 bis 20 C-Atomen mit 5 bis 20 Mol Äthylenoxid je Mol Aminogruppe;
d) Umsetzungsprodukte von gesättigten und/oder ungesättigten Fettsäuren mit 14 bis 20 C-Atomen mit 5 bis 20 Mol Äthylenoxid je Mol Carboxylgruppe.

Von diesen Äthylenoxid-Addukten sind die unter b) genannten Umsetzungsprodukte bevorzugt.

Auch Gemische Der Äthylenoxid-Addukte nach a), b), c) und d) untereinander sind verwendbar. Diese Gemische erhält man durch Mischen einzelner Umsetzungsprodukte oder direkt durch Äthoxylierung eines Gemisches der den Addukten zugrunde liegenden Verbindungen.

Als gesättigte und/oder ungesättigte Fettalkohole kommen für a) Dodecanol, Palmitylalkohol, Stearylalkohol, Oleylalkohol oder Talgfettalkohole, vorzugsweise Hexanol, 2-Äthylenhexanol und Decanol in Betracht.

Als Alkylphenole für b) sind Butylphenol, Hexylphenol, vor allem jedoch Isooctylphenol, p-tert.-Octylphenol, Nonylphenol und Dodecylphenol zu nennen.

Als Fettamin für c) kommt z.B. neben Stearylamin und Palmitylamin vor allem Oleylamin in Betracht.

Für d) sind als gesättigte und/oder ungesättigte Fettsäuren z.B. Palmitinsäure, vor allem Stearinsäure und Ölsäure zu nennen.

Ferner kommen auch Äthylenoxid/Propylenoxid-Blockpolymerisate in Frage, z.B. solche mit mittelständiger Polypropylenglykol-Einheit und einem Molgewicht von 1000 bis 20 000.

Als kationische Tenside sind beispielsweise quaternäre Alkylammoniumhalogenide mit mindestens einem $C_{12}$ bis $C_{25}$ Alkylrest und langkettige Alkylpyridiniumhalogenide genannt.

Das Tensid oder Tensidgemisch wird in einer Menge von 0,2 bis 30 Gew.-%, insbesondere von 0,5 bis 15 Gew.-%, bezogen auf die theoretisch zu erwartende Farbstoffmenge eingesetzt.

Als Membrantrennverfahren gelangen im erfindungsgemäßen Verfahren vor allem die folgenden membrangebundenen Filtrationsverfahren zur Anwendung:

– Feinfiltration oder Mikrofiltration unter Verwendung von Porenmembranen mit einem Porendurchmesser von 0,5 bis 20 µm

– Ultrafiltration unter Verwendung feinporiger Membranen mit einem Porendurchmesser von 10 Å bis 1 µm

– Hyperfiltration über Ionenaustauscher- oder Lösungsdiffusions-Membranen mit einem Porendurchmesser von < 20 Å

Zur Theorie und Anwendung von Membrantrennprozessen siehe z.B. H. Strathmann; Chemie-Technik 7, 333 (1978) oder W. Pusch, A. Walch; Angew. Chem. 94, 670 (1982).

Von diesen Filtrationsverfahren wird im vorliegenden Fall bevorzugt die Ultrafiltration angewandt. Als Membranen kommen sowohl solche aus organischem, als auch anorganischem Material in Frage. Organische Membranmaterialien sind z.B. Polyvinylidenfluorid, Celluloseacetat, Polytetrafluoräthylen, Copolymerisate aus Polyacrylnitril und Vinylpyrrolidon, Polysulfon, Polyamid oder auch hydrophilierte Polyolefine. Anorganische Membranen sind z.B. solche aus porösem Kohlenstoff, dessen Oberfläche mit einer dünnen Schicht aus Zirkonoxid oder Aluminiumoxid belegt ist oder aus porösem Glas. Organische wie anorganische Membranen werden zweckmäßigerweise in Rohrform verwendet, wobei mehrere Röhren in einem Rohrmembranmodul zusammengefaßt werden.

Aufgrund ihrer guten Beständigkeit gegenüber Säuren und Laugen bieten anorganische Membranen die Möglichkeit, die heiße, stark saure Synthesedispersion ohne vorhergehende Neutralisation direkt aufzukonzentrieren und säurefrei zu waschen.

Nach dem Membrantrennverfahren wird die konzentrierte, neutrale, weitgehend salzfreie Farbstoffdispersion, falls nötig, mittels Zwischenabsiebung von einer unwesentlichen Menge grober Partikel befreit und zu einer lagerstabilen Flüssigformulierung oder einem festen Präparat weiterverarbeitet.

Zur Herstellung einer handelsfertigen Flüssigform ist die Farbstoffdispersion gegebenenfalls nach Zugabe von den, für Flüssigformulierungen üblichen Beigaben, wie Textilhilfsmitteln, schaumdämpfenden Mitteln, Gefrierschutzmitteln, Feuchthaltemitteln, Dispergiermitteln und/oder Antimikrobika, nur noch durch Verdünnen und/oder mit Hilfe von Coupagemitteln auf einen vorgegebenen Endfarbstoffgehalt einzustellen. Die Farbstoffdispersion kann aber auch, gegebenenfalls nach Zugabe von Zusätzen, wie Bindemitteln, Entstäubungsmitteln, Dispergiermitteln und/oder Coupagemitteln, durch Trocknen in ein festes Farbstoffpräparat überführt werden. Dank der erhöhten Farbstoffkonzentration benötigt man weniger Energie zum Trocknen. Man verwendet übliche Trocknungsverfahren, insbesondere die Sprühtrocknung.

Verwendung finden die Farbstoffpräparate zur Herstellung von Färbebädern, Klotzflotten oder Druckpasten, die sich vor allem zum Färben von hydrophobem Fasermaterial, insbesondere Polyester eignen.

Die folgenden Beispiele dienen der Erläuterung der Erfindung; Teile bedeuten Gewichtsteile und Prozente Gewichtsprozente.

Beispiel 1:

67 Teile Eisessig werden zusammen mit 25,6 Teilen 4-Nitroanilin, 70,5 Teilen N-(Cyanoäthoxyäthyl)-N-(β-cyanoäthyl)-anilin (53,9%ige Lösung), 2 Teilen nicht-ionisches Alkylenoxid-Addukt aus 1 Mol p-tert.-Octylphenol und ca. 8 Mol Äthylenoxid und 2,5 Teilen Naphthalinsulfonsäure-Formaldehydkondensat bei 3 bis 5 °C vorgelegt. Unter kräftigem Rühren werden während einer Stunde 38 Teile 4 N Natriumnitritlösung zugetropft. Die Temperatur wird währenddessen auf 3 bis 5 °C gehalten. Nach beendeter Reaktion rührt man noch 5 Stunden weiter, dann wird die Farbstoffdispersion mittels Ultrafiltration von der Essigsäure befreit, neutral gewaschen und aufkonzentriert. Zur Ultrafiltration verwendet man ein Rohrmembranmodul mit einer Membranfläche von 0,16 m². Die Membranmatrix besteht aus Graphit; auf der Innenseite ist eine poröse Zirkonoxidschicht aufgebracht. Die molekulare Abscheidungsgrenze liegt bei einem Molgewicht von ca. 40 000. Gearbeitet wird mit einer Durchflußgeschwindigkeit von 4 bis 5 m/sec. und einem Druck von 3 bis 5 bar. Der Feststoffgehalt der Dispersion liegt zu Beginn der Ultrafiltration bei 8 bis 15% und beträgt am Ende 30 bis 35%.

Im Anschluß an die Ultrafiltration wird die orangefarbene Dispersion entweder durch Zusatz von Dispergator und Äthylenglykol zu einem Flüssigpräparat weiterverarbeitet oder nach Zugabe von Dispergator und Coupagemittel zerstäubungsgetrocknet. Das flüssige, wie auch das feste feinkristalline Präparat kann direkt zum Färben von Polyester-, Acetat- und Triacetat-Fasermaterial verwendet werden.

Das Flüssigpräparat hat die folgende Zusammensetzung:

16,7% Farbstoff
16,2% Dispergator (Oxiligninsulfonat)
10%    Äthylenglykol
0,5% Chloracetamid
56,6% Wasser

Das feste Farbstoffpräparat hat die Zusammensetzung:

33,3% Farbstoff
51%    Oxiligninsulfonat
14,7% Naphthalinsulfonsäure-Formaldehydkondensat
1%    2-Heptadecyl-benzimidazol-disulfonsäure·Na-Salz.

**Beispiel 2:**

Man verfährt wie im Beispiel 1 beschrieben, verwendet jedoch anstelle von 2 Teilen Äthylenoxid-Addukt 2,5 Teile Natriumdioctylsulfosuccinat.

**Beispiel 3:**

Man verfährt wie im Beispiel 1 beschrieben, verwendet jedoch als oberflächenaktives Mittel nur ein nicht-ionisches Tensid, und zwar 2,5 Teile des dort angegebenen Octylphenoläthoxylats.

**Beispiel 4:**

520 Teile Eisessig werden bei 0° bis 3 °C zusammen mit 24,2 Teilen 2-Chlor-4-nitroanilin (Gehalt: 71,4%), 17,6 Teilen N,N-Bis-(2-cyano-äthyl)-anilin (Gehalt: 79,4%) und 7,5 Teilen N,N-Bis-(2-cyano-äthyl)-1,3-toluidin (Gehalt: 85,7%) sowie 5 Teilen sulfomethyliertem Hydroxy-ligninsulfonat (anionisches Tensid) aus alkalischem Holzaufschluß nach dem Kraft®-Prozeß vorgelegt und unter kräftigem Rühren werden während 30 Minuten 25 Teile 4N-Natriumnitritlösung zugetropft. Die Temperatur wird währenddessen auf 0° bis 3 °C gehalten. Nach beendeter Reaktion rührt man das Reaktionsgemisch noch 2 Stunden weiter, dann wird die Farbstoffdispersion mittels Ultrafiltration von der Essigsäure befreit, neutral gewaschen und aufkonzentriert.

Zur Ultrafiltration verwendet man das gleiche Modul wie im Beispiel 1 angegeben.

Im Anschluß an die Ultrafiltration wird die orangefärbende, feine Dispersion (mittlere Teilchengröße 2 µm) nach Zusatz von Dispergatoren und üblichen Additiven zu einem Flüssigpräparat weiterverarbeitet oder direkt zerstäubungsgetrocknet.

Das flüssige wie auch das feste, feinteilige Präparat kann direkt zum Färben von Polyester-, Acetat- und Triacetat-Fasermaterial verwendet werden.

Das Flüssigpräparat hat die folgende Zusammensetzung:

25%    Farbstoff
12%    Oxiligninsulfonat-Dispergator
6,6% Naphthalinsulfonat-Dispergator
8,8% Sorbit (Feuchthaltemittel)
0,5% Chloracetamid (Fungizid)
47,1% Wasser

Das feste Farbstoffpräparat hat die Zusammensetzung:

50% Farbstoff
35% Oxiligninsulfonat-Dispergator
10% Naphthalinsulfonat-Dispergator
5% Restfeuchte

**Patentansprüche**

1. Verfahren zur Herstellung von Präparaten von in Wasser schwer- bis unlöslichen Azofarbstoffen durch gleichzeitiges Diazotieren und Kuppeln in einer Eintopfreaktion, Filtrieren der Farbstoffdispersion und gegebenenfalls anschließende Trocknung, dadurch gekennzeichnet, daß man die gleichzeitige Diazotierung und Kupplung unter intensiver Durchmischung der wäßrigen Lösung bzw. Suspension der Reaktanden, in Gegenwart eines oder mehrerer oberflächenaktiver Mittel durchführt, die verdünnte Farbstoffdispersion mittels Membrantrennverfahren aufkonzentriert und zumindest teilweise entsalzt und/oder von Säure befreit und, ohne jegliche Mahlung, in eine lagerstabile Flüssigformulierung oder durch Trocknen in ein festes Farbstoffpräparat überführt.

2. Verfahren gemäß Anspruch 1, dadurch gekennzeichnet, daß man als oberflächenaktives Mittel ein anionisches und/oder nichtionisches Tensid verwendet.

3. Verfahren gemäß Anspruch 2, dadurch gekennzeichnet, daß man ein anionisches Tensid verwendet.

4. Verfahren gemäß Anspruch 2, dadurch gekennzeichnet, daß man als anionisches Tensid ein Naphthalinsulfonsäure-Formaldehydkondensat, ein Ligninsulfonat oder ein Dialkylsulfosuccinat und/oder als nicht-ionisches Tensid ein Alkylphenol-, Fettalkohol-, Fettsäure- oder Fettaminäthoxylat verwendet.

5. Verfahren gemäß Anspruch 1, dadurch gekennzeichnet, daß man das oder die oberflächenaktiven Mittel in einer Menge von 0,5 bis 15 Gew.-% bezogen auf die theoretisch zu erwartende Farbstoffmenge einsetzt.

6. Verfahren gemäß Anspruch 1, dadurch gekennzeichnet, daß als Membrantrennverfahren die Feinfiltration, Ultrafiltration oder Hyperfiltration zur Anwendung gelangt.

7. Verfahren gemäß Anspruch 6, dadurch gekennzeichnet, daß das Membrantrennverfahren aus einer Ultrafiltration besteht.

8. Verfahren gemäß Anspruch 1, dadurch gekennzeichnet, daß die aufkonzentrierte, zumindest teilweise entsalzte Farbstoffdispersion durch Zugabe von Coupage, Gefrierschutzmittel, Feuchthaltemittel, Dispergiermittel und/oder Antimikrobika in eine lagerstabile Flüssigformulierung überführt wird.

9. Verfahren gemäß Anspruch 1, dadurch gekennzeichnet, daß die aufkonzentrierte, zumindest teilweise entsalzte Farbstoffdispersion durch Sprühtrocknen in ein Granulat überführt wird, wobei vor und/oder nach dem Trocknen Bindemittel, Entstäubungsmittel, Dispergiermittel und/oder Coupagemittel zugegeben werden.

10. Verwendung der nach dem Verfahren gemäß Anspruch 1 erhaltenen Farbstoffpräparate zum Färben oder Bedrucken von hydrophobem Fasermaterial.

## Claims

1. A process for the preparation of formulations of sparingly water-soluble to water-insoluble azo dyes by simultaneous diazotisation and coupling in a single-vessel reaction, filtering the dye dispersion and, optionally, subsequently drying the dye, which comprises carrying out the simultaneous diazotisation and coupling by thoroughly mixing the aqueous solution or suspension of the reactants, in the presence of one or more surface-active agents, concentrating the dilute dye dispersion by means of a membrane separation process, and at least partially removing salt and/or acid from the dispersion and, without any grinding, converting it into a storage-stable liquid formulation or, by drying, into a solid dye formulation.

2. A process according to claim 1, wherein the surface-active agent used is an anionic and/or a nonionic surfactant.

3. A process according to claim 2, wherein an anionic surfactant is used.

4. A process according to claim 2, wherein the anionic surfactant used is a condensate of naphthalenesulfonic acid and formaldehyde, a lignosulfonate or a dialkyl sulfosuccinate, and/or the nonionic surfactant used is an alkylphenol-, fatty alcohol-, fatty acid- or fatty amine-ethoxylate.

5. A process according to claim 1, which comprises using the surface-active agent or agents in an amount of 0.5 to 15% by weight, based on the theoretically expected amount of dye.

6. A process according to claim 1, wherein the membrane separation process employed is microfiltration, ultrafiltration or hyperfiltration.

7. A process according to claim 6, wherein the membrane separation process employed consists of ultrafiltration.

8. A process according to claim 1, wherein the concentrated, at least partially desalted dye dispersion is converted into a storage-stable liquid formulation by addition of diluents, antifreeze agents, humectants, dispersants and/or microbicides.

9. A process according to claim 1, wherein the concentrated, at least partially desalted dye dispersion is converted into granules by spray-drying, binders, dust inhibitors, dispersants and/or diluents being added before and/or after drying.

10. Use of a dye formulation obtained according to the process of claim 1 for dyeing or printing hydrophobic fibre material.

## Revendications

1. Procédé pour la fabrication de préparations de colorants azoïques difficilement solubles ou insolubles dans l'eau, par diazotation et copulation simultanées dans une réaction dans un seul pot, filtration de la dispersion de colorant et éventuellement séchage subséquent, caractérisé en ce que la diazotation et la copulation simultanées sont effectuées avec un brassage énergique de la solution ou suspension aqueuse des réactifs, en présence d'un ou de plusieurs agents tensioactifs, la dispersion de colorant diluée est concentrée au moyen de procédés de séparation par membrane, dessalée au moins partiellement et/ou débarrassée des acides et transformée, sans aucun broyage, en une formulation liquide supportant le stockage ou, par séchage, en une préparation solide de colorant.

2. Procédé selon la revendication 1, caractérisé en ce qu'un agent de surface anionique et/ou non-ionique est utilisé comme agent tensio-actif.

3. Procédé selon la revendication 2, caractérisé en ce qu'un agent de surface anionique est utilisé.

4. Procédé selon la revendication 2, caractérisé en ce que l'on utilise comme agent de surface anionique un produit de condensation d'acide naphtalène-sulfonique et de formaldéhyde, un lignine-sulfonate ou un sulfosuccinate de dialkyle, et/ou comme agent de surface non-ionique un produit d'éthoxylation d'alkylphénol, d'alcool gras, d'acide gras ou d'amine grasse.

5. Procédé selon la revendication 1, caractérisé en ce que le ou les agents tensio-actifs sont employés en une quantité allant de 0,5 à 15 pour cent en poids par rapport à la quantité de colorant théoriquement prévisible.

6. Procédé selon la revendication 1, caractérisé en ce que l'on utilise comme procédé de séparation par membrane la microfiltration, l'ultrafiltration ou l'hyperfiltration.

7. Procédé selon la revendication 6, caractérisé en ce que le procédé de séparation par membrane est une ultrafiltration.

8. Procédé selon la revendication 1, caractérisé en ce que la dispersion de colorant concentrée et au moins partiellement dessalée est transformée en une formulation liquide supportant le stockage par l'addition d'agents de coupure, d'agents antigel, d'agents humidificateurs, d'agents dispersants et/ou d'agents anti-microbes.

9. Procédé selon la revendication 1, caractérisé en ce que la dispersion de colorant concentrée et au moins partiellement dessalée est transformée en un granulat par séchage par pulvérisation, des liants, des agents de dépoussiérage, des agents dispersants et/ou des agents de coupure étant ajoutés avant et/ou après le séchage.

10. Utilisation des préparations de colorants obtenues suivant le procédé selon la revendication 1 pour la teinture ou l'impression de matières en fibres hydrophobes.